# EUROPEAN PATENT APPLICATION

(11) **EP 2 008 984 A2**
(43) Date of publication of application: **31.12.2008**
(21) Application number: 05826122.3
(22) Date of filing: 30.12.2005
(51) Int. Cl.: C04B 35/01, B22D 41/02

(54) **IMPROVED REFRACTORY COATING FOR LADLES USED IN THE STAINLESS STEEL INDUSTRY**

(71) Applicant: Fajardo Sola, Pedro, 46930 Quart de Poblet, Valencia (ES)
(72) Inventor: Fajardo Sola, Pedro, 46930 Quart de Poblet, Valencia (ES)
(74) Representative: Chanza Jordan, Dionisio
(86) International application number: PCT/ES2005/070191
(87) International publication number: WO 2007/077267

(57) **Abstract**

The invention relates to an improved refractory coating for ladles used in the stainless steel industry in order to prevent any interaction between brick and slag, wich has a determinant effect on the deteroriation of the coating in the absence of aforedmentioned reaction, the other destructive effects of the bricks have a reduced affect.The exact purpose of the invention is to prevent the brick/slag inteaction using a brick that is compacted under high preassure with a density of more than 3 kg/decimetre³ and a porosity of less than 4%. The said brick has a composition containing between 66-68 wt % Magnesite (MgC03), between 14-15 wt% Alumina (Al2O3), and between 9-10 wt% Graphite, as well, between 7-9 wt% of additives that are used to improve thermal shock, heat resistance and oxidation ( in a combined composition of Aluminium powder, Silicon metal, Silicon carbide, and clay). Moreover, the invention comprises between 2-3 wt% phenolic resins by weight of a binder, in relation to the total percentages referred to above.

## Description

### 1. FIELD

The invention protected by this patent is an improved refractory coating for ladles used in the stainless steel industry.

It concerns to a brick used to line the interior of transport or tapping ladles employed in the production of stainless steel, that by virtue of its refractory qualities, is highly resistant to chemical reactions, heat and abrasion. During the production of stainless steel, the transport ladle supplies the transfer from the electrical oven to the converter, while the tapping ladle is filled with molten stainless steel from the converter, refines and moves it to the casting.

### 2. BACKGROUND ART

Various refrectory materials are currently known and used, but they all due to the special properties of the stainless steel - very low carbon contents -, do not contain Graphite in their composition by the reason of a risk of the steel contamination.

These materials present operative and functional drawbacks, causing limited duration of the ladles. Consequently, the use of materials developed hitherto presents certains limitations compared to the technical and cost advantages of the invention describe herein.

All these refractory materials used and known for this field, do not contain Graphite.

As prior patents, the US Patent MINTEQ INTERNATIONAL INC. n° US686579 , the swiss Patent FOSECO TRADING AG n° 8510143 and the international PCT application n° W02004/016568 of the same applicant, PEDRO FAJARDO SOLA.

In relation with the US Patent MINTEQ INTERNATIONAL INC. n° US686579, it concerns a procedure to manufacture all kinds of refractory materials - not necessarily for stainless steel -, with a high level of resins ( (5-10 % in the total weight) wich does nor detail the right percentages of Magnesite and Alumina, neither their mixtures, and that are manufactured as powder.

The swiss Patent FOSECO TRADING AG n° 8510143, describes as well, a procedure to manufacture the casting tubes in the steel industry.They are used as conduction and protection elements of the molten steel against the oxidation, and not for the stainless steel industry ladles, which store molten steel along the production, and suffer a more aggressive and continuous physical-chemical deterioration because of the slags. It results a formless configuration product, manufactured as powder, to be employed mixed with water inside the tubes, and showing a foam substance with a high index of water and resins.

All of these are prior to the invention described herein but are generic and imprecise compared to the same, and are often designed for the steel industry; in all these inventions the resulting chemical composition or form are either not applied to the peculiarities of the ladles used in the stainless steel production, compared to that described herein.

And finally, based on the PCT application n° WO2004/016568 of the same applicant, PEDRO FAJARDO SOLA, and according to the technical results it carries out an improvement of the same, in its composition and showing a compacted and pressed brick, with optimal properties against deterioration.

### 3. TECHNICAL PROBLEM

The use of refractory materials is currently known in the steel industry. However, the stainless steel production is extremely low comparised with the steel production, so it is very usual to employ the same refractory materials for both of them. Refractory materials in the steel industry have to be resistant to abrasion, thermal shocks, the pouring impacts, working temperaturas ( 1650 Celsius), and chemical attack, all this Carbonless in the stainless steel.

This invention surpasses the above-mentioned limitations and increases the operational capacity and performance of the material, obtaining a harder and more resistant refractory material for stainless steel with an output around three times higher than the conventional materials.

### 4. TECHNICAL SOLUTION

Consequently, in the present invention, the addition of a substance containing Carbon, like Graphite combined with certain Magnesite and Alumina percentages, and highly pressed during the production, developes physical and chemical properties in the final product with lower deterioration, and a non detectable Carbon supply in the steel.

In this sense, it is essential , so the choice of verified and determined percentages of the composition, as its compression with a high pressure in order to obtain a thickness of the brick higher than 3 kg/decimetre³ and a porosity lower than 4 %.

### 5. ADVANTAGEOUS EFFECTS

Magnesite's basical feature stabilizes the brick against the basic feature of the slag, that avoid the reaction and confussion with slags inside the lining of the ladles during the stainless steel production.

But, to be resistant against abrasion, thermal shocks, and the pouring impacts, it is necessary to supply Alumina. Both of them, solve these effects , and improve the Magnesite limitation by itself.

This property ( non reaction between slag and brick), allows us to supply Graphite in order to manage the expansions and contractions of the obtained product, and so mantain the stability of the whole coating.

This combination of crystalline compounds formed in the main from magnesium- alumina-graphite is prepared by combining exact proportions of each substances to achieve high refractory capacity in a longer working life of the lining of transfer and tapping ladles in the stainless steel industry. In this sense, it is also very important, the compression of the brick with a high pressure in order to obtain a thickness of the brick higher than 3 kg/decimetre³ and a porosity lower than 4%.

In short, the result obtained by combining these components and percentages maekes it possible to obtain a technical advantage with a product of greater hardness and greater resistance to the deformation caused by the impact of poured molten metal and the ensuing physical and chemical reactions.This entails considerable economic advantages, given than the new invention raises the number of utility cycles obtained from the ladles, resulting in an advantage in the productive process, in addition to the above mentioned technical and economic improvements.

The slag composition control is very important, because the huge performance and output of this brick reaches when the basic index of the slag (CaO/SiO2) is equal or higher than 2.In this case, with a great Magnesite proportions - with basic property - the brick overcomes the effects of the slag, highly basic.

### 6. BEST MODE

In a Laboratory, bricks are prepared containing variable Magnesite and Alumina amounts. In the second step, powdered slag is filled in a hole perforate on the surface. Next, bricks were introduced in an oven with temperature of 1650 Celsius, equal to the working temperature of the ladles.

Later, bricks were taken out from the oven, and it showed that the powdered slag did not react with them if they contained concentrations higher than 65 wt%. That means that the bricks with a composition containing between 66-68 wt % Magnesite and between 14-15 wt% Alumina, were the more resistant ones. This resistance allowed to add between 9-10 wt% Graphite, wich a succes to the control of the expansion of their coating.

As well, between 7-9 wt% of additives were used to improve thermal shock, heat resistance and oxidation ( in a combined composition of Aluminium powder, Silicon metal, Silicon carbide, and clay). Moreover, the invention comprises between 2-3 wt% phenolic resins by weight of a binder, in relation to the total percentages referred to above. All this compacted under high pressure (hydraulic press) resulting a composition and treatement of the bricks of this invention.

Tests made could be summarized in the following Table n° 1, related to bricks with a máximum thickness of 200 milimetres ( Y axis) and an optimal Magnesite percentage of around 68% ( X axis).

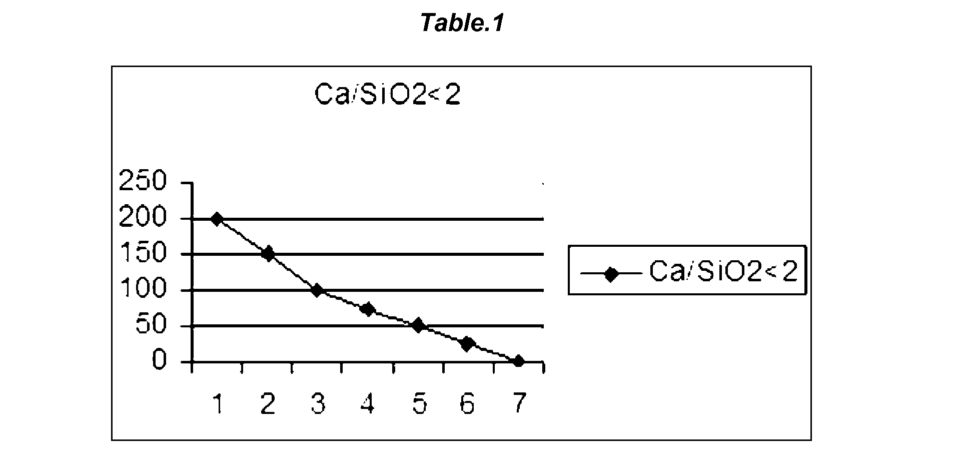

Finally, considering: First of all, the Basic Index of the slag. Secondly, the Magnesite-Alumina relation , and thirdly the high preassure compactation of the brick, a highly resistant body could be formulated , with minimal deterioration, that allowed us to add Graphite (Carbon) to a product that is going to be in contact with stainless steel (something that normally should not be done), due to the minimal wear and deterioration of the coating and a non detectable contamination.

## Claims

1. Improved refractory coating for ladles used in the stainless steel industry **characterised by** a brick compacted under high preassure with a density of more than 3 kg/decimetre³ and a porosity of less than 4%. The said brick has a composition containing between 66-68 wt % Magnesite (MgC03), between 14-15 wt% Alumina (Al2O3), and between 9-10 wt% Graphite. As well, between 7-9 wt% of additives that are used to improve thermal shock, heat resistance and oxidation ( in a combined composition of Aluminium powder, Silicon metal, Silicon carbide, and clay). Moreover, the invention comprises between 2-3 wt% phenolic resins by weight of a binder, in relation to the total percentages referred to above.
